# EUROPEAN PATENT APPLICATION

(11) **EP 4 037 280 A1**
(43) Date of publication of application: **03.08.2022**
(21) Application number: 21153768.3
(22) Date of filing: 27.01.2021
(51) Int. Cl.: H04L 29/06, G06F 21/62

(54) **SYSTEM AND METHOD FOR CROSS ACCOUNT COMMUNICATION ACROSS ONE OR MORE COMPUTING PLATFORMS**

(71) Applicant: Siemens Aktiengesellschaft, 80333 München (DE)
(72) Inventor: Burger, Stefan, 81241 München (DE); Ebertsch, Stefan, 90411 Nürnberg (DE)

(57) **Abstract**

System and method for cross account communication across one or more computing platforms (210, 310) are disclosed. The method comprising establishing a trust relationship between accounts (A, B) within a computing platform (310) or between a first computing platform and a second computing platform of the one or more computing platforms (210, 310), wherein the trust relationship allows for the accounts (A, B) on the computing platforms (210, 310) to exchange tokens mapping roles of a user (110) in a first account (130, A) of the computing platform (310) to equivalent roles for a second account (150, B) of the computing platform (310) based on the established trust relationship; and enabling communication between the user (110) and a second application (App2, 330) hosted by the second account (150, B) limited to the equivalent roles.

## Description

The present invention relates system and method for cross account communication across one or more computing platforms. Particularly relates to cross account communication without manual intervention.

Existing computing platforms cannot establish communication between each other without high implementation effort. Further, within a computing platform one customer zone (e.g. Tenant/Account zone) cannot communicate with another one because of security. Typically, the computing platform customer zone security prohibits that one customer can call endpoints from another one or that one customer can get access to data of another one. However, the customer zone security results in restrictions on APIs (Application Programming Interfaces) that are used between two or more computing platforms. In another example, a customer/ tenant/ account of the computing platform is unable to gain/share insights on industrial assets with another customer in the same industrial domain on the same computing platform.

Additionally, different computing platforms use different security approaches (i.e. JSON Web Token (JWT), sessions objects, HASH values etc.). Hence, a migration is necessary to allow communication from one computing platform to another. Accordingly, this results in high implementation effort.

The objective of the present invention is to enable cross account communication across a one or more computing platforms. Particularly relates to cross account communication without manual intervention.

The object of the invention is achieved for example by a method for cross account communication across one or more computing platforms, the method comprising: establishing a trust relationship between accounts within a computing platform or between a first computing platform and a second computing platform at the one or more computing platforms, wherein the trust relationship allows for the accounts on the computing platforms to exchange tokens; mapping roles of a user in a first account of the (first) computing platform to equivalent roles for a second account of the (second) computing platform based on the established trust relationship; and enabling communication between the user and an application hosted by the second account for the equivalent roles.

In an embodiment, the object of the invention is achieved by a system for cross account communication across one or more computing platforms, the system comprising: a token exchange interface configured to perform one or more steps according to the method disclosed herein; and a gateway configured to: receive application calls from a first application hosted on the first account; initiate the application token exchange; and enable the user to access a second application hosted on the second account.

In yet another embodiment, the object of the present invention is achieved by a computer program comprising instructions which, when executed by a processor, cause the processor to carry out the method. The object of the present invention may be achieved by a computer program comprising instructions when executed by disclosed system, in particular a distributed computing system, cause the system to carry out the method disclosed.

The present invention enables cross account communication while using different security approaches between the computing platforms (JWT to Hash codes as example). Particularly, the present invention enables secure private key signing and storing by establishing a trust relationship between customer zones. The system and method of the present invention allows easy configuration of security exchanges between the computing platforms and also within a computing platform. For example, the present invention advantageously matches from one JWT structure to another one in the same computing platform or between roles/permissions in one account to the other account. The present invention is advantageous over known token exchange methods as they do not support a management interface to map roles/scopes (i.e. permissions) or token structures. The invention allows to configure the role (permission) mapping and to remove or add roles (permissions) if necessary.

Before describing the suggested convention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

The assets may be control devices, sensors, actuators. For example, Computer Numerical Control (CNC) machines, automation systems in an industrial production facility, motors, generators and the like. The automation environment refers to a facility that for manufacture, production that may be semi or completely automated. For example, industrial automation environment, laboratory automation environment, building automation environment and the like. Further, according to the present invention, automation environment may include a combination of one or more industrial automation environments, laboratory automation environments, building automation environments.

As used here "computing platform" refers to computing resources that are capable of storing and processing large amounts of data from the industrial environment. For example, the computing platform may be a cloud computing platform or an edge computing platform. In the computing platform, the provisioning of the resources is fully automated and orchestrated. Separation of users/tenants/accounts of the computing platform, may be done both functionally and in terms of security. Accordingly, as used herein "account" refers to users or tenants of the computing platform and "account zone" refers to security zone that is provisioned to each account. The account zone may be provisioned by account-aware software provisioning or through virtualizing hardware. The security features/constraints of each account zone may be different. The present invention is advantageous as it enables communication between accounts irrespective of the underlying security constraint.

Herein the following terms are used "first account", "second account", "first application" and "second application". These terms merely illustrate that there are more than one accounts hosted on the one or more computing platforms. Further, the first application and the second application are mere examples. Each account may host a plurality of applications. Furthermore, each account may have a plurality of users using the applications.

As used herein "application" refers to software code that is used to perform a function using data from the automation environment. For example, the application is a web-based condition monitoring application configured to monitor condition of the assets in the automation environment. The application may be hosted on one or more accounts of the computing platform. Other examples of an application may be a fault detection application. The present invention advantageously enables results of the condition monitoring application hosted on one account to be shared with the fault detection application on another account. Accordingly, the technical effect of the present invention is to harness the features of applications across accounts within or across computing platforms without compromising on security/privacy of the accounts.

As used herein "trust relationship" refers to a token/private key or contract that is used to establish a trusted relationship between accounts within a computing platform or between two or more computing platforms. The trust relationship is advantageously built between accounts. Therefore, the interaction between the applications hosted on the accounts are faster as individual trust relationships between applications is not required.

As used herein "roles of a user" refers to access and identity rights of a user of an account. The role of the user includes scope and permissions of use of the applications hosted on the account. In an embodiment, the role of the user can be modified based on the application accessed and based on the account. The present invention achieves the technical effect of dynamically changing the roles of the user based on the application and the account.

The present invention includes establishing the trust relationship between one of accounts within a computing platform and between a first computing platform and a second computing platform of the one or more computing platforms, wherein the trust relationship allows for the accounts on the computing platforms to exchange tokens. Further, the method may include establishing the trust relationship between account zones of the first computing platform and the second computing platform. In an embodiment, the trust relationship is also established between accounts within the first computing platform. Consequently, the method may include establishing the trust relationship between account zones with the first computing platform. The trust relationship harmonizes the security constraints in the account zones based on the tokens exchanged. Accordingly, the trust relationship acts as a basis for communication between accounts.

The method may include exchanging tokens between the first account and a token exchange interface; exchanging tokens between the second account and the token exchange interface; and establishing the trust relationship between the first account and the second account based on the exchange of the tokens with the token exchange interface. The token exchange interface advantageously serves as a trusted interface between the accounts thereby enabling cross account communication. The token exchange interface may be configured to call/request the first account and the second account for tokens in order to establish communication between the accounts. In an embodiment, the parameters in the tokens received by the token exchange interface includes account/tenant identity, path, schema, identity of the user of an account, application identity, etc. By implementing the token exchange interface, the present invention is able to negotiate between different security approaches used by the accounts.

The method further includes mapping roles of a user in a first account of the first computing platform to equivalent roles for a second account of the second computing platform based on the established trust relationship. The method may include determining permissions of the user from the roles in the first account, wherein the roles comprise at least the permissions and user identifier; and mapping the permissions to equivalent permissions for the second application. Accordingly, the method restricts the interaction of the user in the second account to permitted roles that are identified by comparing the roles in the first account to equivalent roles in the second account. In an embodiment, the roles are automatically mapped to the equivalent roles based on the principle of least privileges). The technical effect is that the user can call only the second application hosted on the second account. This avoids a scenario where the user can call other application in the same account zone (i.e. any other application hosted by the second account).

The method includes enabling communication between the user and an application hosted by the second account limited to the equivalent roles. In an embodiment, the method may include exchanging application tokens between the first application hosted on the first account and the second application hosted on the second account via the token exchange interface. The application tokens are differentiated from the tokens exchanged between the accounts and the computing platforms. The application tokens are responsible for ensuring that access to the second account is limited to the equivalent roles.

By distinguishing the application tokens from the tokens exchanged between the computing platforms/accounts, the token exchange prevents reuse of the tokens exchanged between the token exchange interface and the first account or the second account. Accordingly, the method may include preventing reuse of the tokens exchanged between the token exchange interface and the first account or the second account, wherein communication between the first account and the second account is activated based on the application token exchange.

The method may include receiving an access request from the user by the second application; authenticating the access request based on the application token exchange; and enabling the user to access the second application and associated data based on the permissions. The token exchange interface controls the nature of access (i.e. defines roles and permissions) of the user based on the application token exchange. The present invention advantageously permits/restricts access to data associated with the second account based on the permissions.

The token exchange interface may be implemented in multiple ways. For example, the token exchange can act as an impersonator. Accordingly, the method may include sharing access rights of the second account to the user via the first account based on the token exchange, whereby the first account is indistinguishable from the second account.

When the first account impersonates the second account, the first account is given all the rights that second account has within some defined rights context and is indistinguishable from the second account in that context. Thus, when the first account impersonates the second account, then insofar as any entity receiving such a token is concerned, they are actually dealing with the second account. First account's ability to impersonate the second account could be limited in scope or time, or even with a one-time-use restriction, whether via the contents of the token or an out-of-band mechanism.

In another example, the token exchange interface may be implemented as a delegator. Accordingly, the method may include providing a composite token comprising a subject token and an actor token by the token exchange interface to the second account and the first account, wherein the subject token represents identity of the second account whose access rights has been delegated to the first account, and wherein the actor token represents identity of the user on behalf of whom the access rights are requested by the first account.

Delegation semantics may be different than impersonation semantics, though in some embodiments the two may be closely related. With delegation, the first account still has its own identity separate from the second account. It is explicitly understood that while the second account may have delegated some of its rights to the first account, any actions taken are being taken by the fist account representing the second account. In a sense, the first account is an agent for the second account.

In an embodiment, the first account's (i.e. actor) claim provides a means within a token to express that delegation has occurred and identify the first account (i.e. acting party) to whom authority has been delegated. The first account's claim value may be a JSON object and members in the JSON object are claims that identify the first account (i.e. actor). As used herein "claim" refers to a request to act as a delegate or an agent. In some embodiments multiple claims may be required to establish the first account as an agent/delegate of the second account.

In some embodiments, multiple accounts may be able to communicate with each other via the token exchange. Accordingly, the method may include establishing a chain of trust across a plurality of account zones of the one or more computing platforms; enabling applications hosted by the accounts across the plurality of computing platforms to validate a chain of delegation based on the chain of trust, wherein the chain of delegation comprises a current delegation of the second account and prior delegations nested within the current delegation; and enabling communication between the user and the second application based on the current delegation.

A chain of delegation may be expressed by nesting one claim within another. The outermost claim represents the current delegation while nested claims represent the prior delegations. The least recent delegate is the most deeply nested. The nested claims serve as a history trail that connects the initial delegation request and subject token through the various delegation steps undertaken before reaching the current delegation. In this sense, the current delegation is considered to include the entire authorization/delegation history, leading to the nested structure.

For the purpose of applying access control policy, the second account only considers the token's current delegation and the first account identified as the current actor by the claim. Prior accounts identified by any nested claims are informational only and are not to be considered in access control decisions.

The token exchange interface is implemented as part of the system for cross account communication across one or more computing platforms, disclosed herein. In an embodiment, the system may include at least one processing unit associated with the token exchange interface; and a memory unit communicatively coupled to the processing unit configured to store computer implemented instructions that when executed implement the token exchange interface.

The system may further include an operator module configured to determine whether the first application has external Application Programming Interface (API) dependencies; and enable initiation of the application token exchange when the dependencies are determined.

The system may also include an access management module, wherein the access management module is configured to: receive a request for an application token from the first application; request the application token using on a token exchange user profile created for the first application when the dependencies are determined; receive the application token to initiate the application token exchange; and transmit the application token to the first application, wherein the first application invokes the application token with the token exchange interface to initiate the application token exchange, wherein the first application invokes the second application based on the application token exchange and wherein the second application returns an API response to provide access rights to the user of the first application.

The access management module may include a key manager and an identity access manager. The system advantageously enables creation and support of a new user profile (i.e. a token exchange user profile for the first application) when there are multi-application dependencies identified. Further, access management module ensures fine grained access to the user through API calls.

The present invention advantageously enables machine-machine communication when the user profile is created. If there is no user context associated with the user profile, the token exchange serves uses the user profile to generate the application token. If there is a user context the context is used to generate the application token. By establishing trust between the computing platforms, particularly account zones the need to provide credentials (username and password) for every call/access request is avoided. These credentials need to be managed/stored and rotated regularly on the computing platforms involved, which results in high additional implementation effort, which may be fault-prone and might also lead to security issues. Accordingly, the present invention overcomes high implementation effort, with no security lapses when enabling communication between accounts across one or more computing platforms.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- Fig. 1: illustrates an interaction between accounts, according to an embodiment of the present invention;
- Fig. 2: illustrates a system to enable communication with a tenant application, according to an embodiment of the present invention;
- Fig. 3: illustrates a computing platform to enable communication across accounts, according to an embodiment of the present invention; and
- Fig. 4: illustrates a method to enable communication across accounts hosted in one or more computing platforms, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

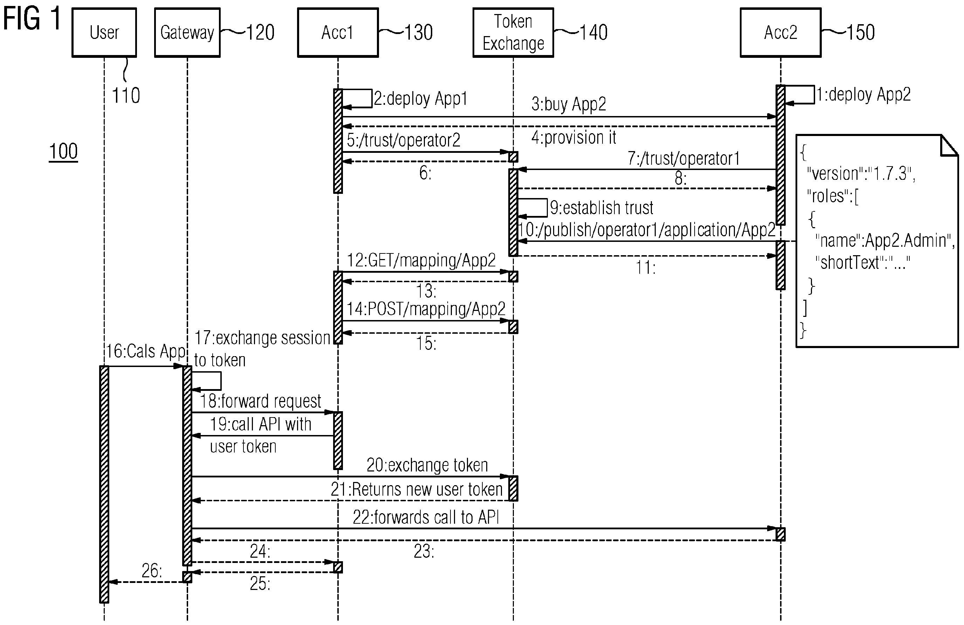

Fig. 1 illustrates an interaction between accounts 130, 150, according to an embodiment of the present invention. The interaction diagram as shown in Fig 1 also illustrates multiple entities such as a user 110 of the first application (Appl) deployed by the first account 130. Further, the user interacts with a gateway 120. The interaction diagram also includes a token exchange interface 140.

The interaction diagram in Fig 1 also illustrates steps performed at each entity, as described herein after. In an embodiment, the following preconditions are met. The user is logged in onto the first account 130 and purchased/licensed the second application (App2). The sequence of steps are as follows.
1. The first account 130 deploys App1
2. The second account 130 deploys App2
3. The first account 130 "buys" App2 on behalf of the user 110
4. The second account 150 provisions App2 to the first account 130
5. The first account 130 initiates establishment of trust with the second account 150 via the token exchange interface 140 using tokens
6. The token exchange interface 140 returns the tokens
7. The second account 150 initiates establishment of trust with the first account 130 via the token exchange interface 140 using tokens
8. The token exchange interface 140 returns the tokens
9. Token exchange interface 140 established trust based on the token exchanged
10. The second account 150 publishes roles of App2 and version details
11. The token exchange interface 140 acknowledges the publication
12. The first account requests roles for App2 version
13. The token exchange interface 140 returns with the published roles and the version details
14. The first account maps the published roles to roles of the user 110 and transmits it to the token exchange. In an embodiment, the token exchange interface 140 performs the mapping.
15. The token exchange interface 140 performs a return action
16. The user 110 calls an API of App2 provided by the first account 130 via web interface of Appl, using a session
17. Gateway 120 exchanges the session to application token
18. Gateway 120 forwards request with the application token to API of App1
19. API needs additional information from the second account 150 and calls this API of App2 via Gateway 120
20. Gateway 120 recognizes that application token exchange is necessary and sends token to the token exchange interface 140. Gateway 120 determines that the application token exchange is necessary based on a different account name in the Universal Resource Locator.
21. The token exchange interface return new interactive user token to establish communication between the user 110 and the App2.
22. The gateway 120 forwards call to API of App2 with new token in the header.

The steps 23-26 are return actions.

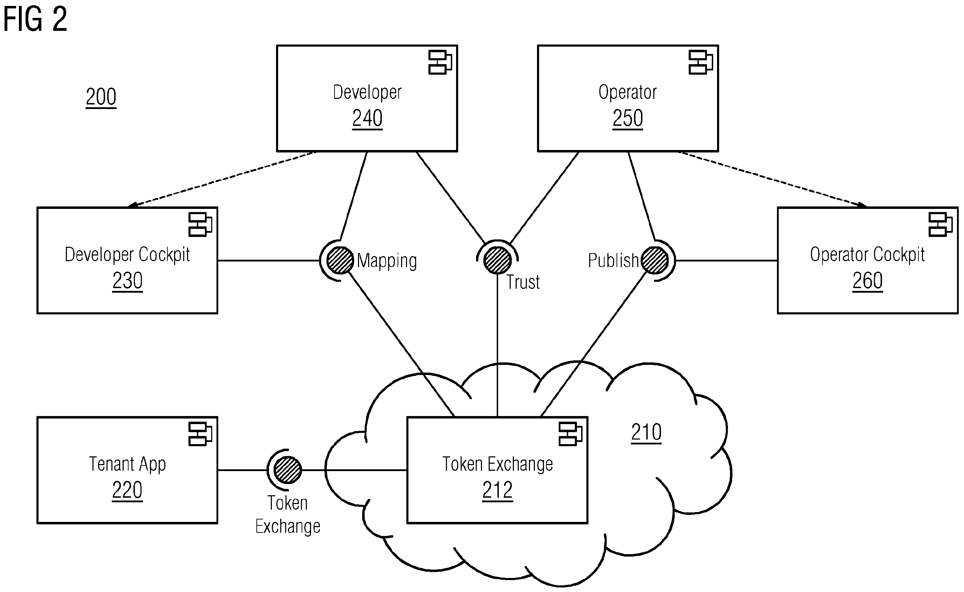

Fig. 2 illustrates a system 200 to enable communication with a tenant/account application 220, according to an embodiment of the present invention. The system 200 includes a computing platform 210 configured to execute a token exchange interface 212. The system 200 also includes a developer cockpit 230 and an operator cockpit 260. The developer cockpit 230 is configured to provision a user interface that allows a developer 240 to configure the token exchange interface 212. The operator cockpit 260 configures mapping of roles of a user in the token exchange interface 260.

In operation, the token exchange interface 212 is configured by the developer cockpit 230 when the roles of a user of a account app 220 are mapped. Further, the token exchange interface publishes equivalent roles of the operator 250 of the operator cockpit. The token exchange interface 212 is configured to establish trust between the developer 240 and the operator when the roles of the user are mapped to the published roles. In an embodiment, the established trust is used to enable to the developer to configure and use the account application 220 by exchanging tokens.

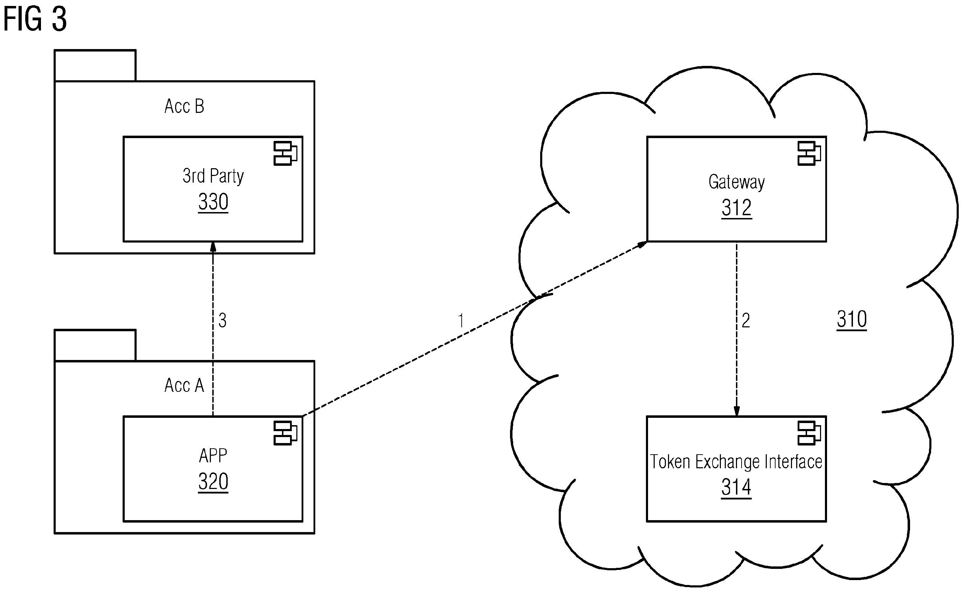

Fig. 3 illustrates a computing platform 310 to enable communication across accounts A and B, according to an embodiment of the present invention. The computing platform 310 includes a gateway 312 and a token exchange interface 314. The gateway 312 is configured to enable communication between the accounts A or B with the token exchange interface 314. This communication is referred to as an indirect call as disclosed in steps 1 and 2. In an embodiment, a direct call may be made from the account A to the token exchange interface 314.

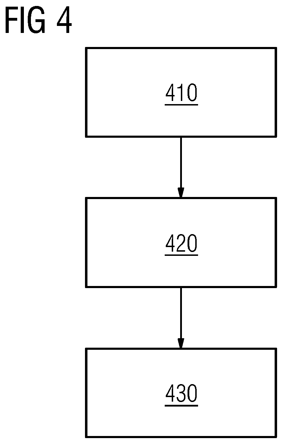

In operation, the token exchange interface 314 is configured to perform the steps described in the method disclosed in Fig. 4. For example, a user of the application 320 provides mappings with a trusted publisher app to the token exchange interface 314. The token exchange interface 314 is configured to determine the rules under which the token exchange is allowed and recognize an expected outcome. The rules include roles and permissions that are used to enable communication between account A and account B. In an embodiment, the rules are determined by the third party application 330. The rules for accessing the third party application 330 are published to the token interface 314 by the account B.

The token exchange interface 314 builds trust between the account A and the account B when tokens are shared from accounts A and B to the token exchange interface 314. The tokens include identity of the account A and account B, identity of a user of the application 320. In an embodiment, the token exchange interface 314 may be configured to maintain a list of the trusted accounts. In an embodiment a developer may be able to modify the list using a developer cockpit.

The computing platform 310 may also include an access management module including a key manager and an identity access manager. The access management module is configured to: receive a request for an application token from the application 320 and request for the application token using on a token exchange user profile created for the application 320 by the gateway 312 when the dependencies in the application 320 are determined. The access management module is configured to receive the application token from the token exchange interface 314 and is configured to initiate the application token exchange. The access management module is further configured to transmit the application token to the first application, wherein the application 320 invokes the application token with the token exchange interface 314 to initiate the application token exchange, wherein the application 320 invokes the third party application 330 at step 3 based on the application token exchange and wherein the third party application 330 returns an API response to provide access rights to the user of the application 320.

Fig. 4 illustrates a method to enable communication across accounts hosted in one or more computing platforms, according to an embodiment of the present invention.

The method begins at step 410 by establishing the trust relationship between one of accounts within a computing platform and between a first computing platform and a second computing platform of the one or more computing platforms. The trust relationship allows for the accounts on the computing platforms to exchange tokens. Further, the step 410 may include establishing the trust relationship between account zones of the first computing platform and the second computing platform. In an embodiment, the trust relationship is also established between accounts within the first computing platform. Consequently, the step 410 may include establishing the trust relationship between account zones with the first computing platform. The trust relationship harmonizes the security constraints in the account zones based on the tokens exchanged. Accordingly, the trust relationship acts as a basis for communication between accounts.

The step 410 may also include exchanging tokens between the first account and a token exchange interface; exchanging tokens between the second account and the token exchange interface; and establishing the trust relationship between the first account and the second account based on the exchange of the tokens with the token exchange interface. The token exchange interface advantageously serves as a trusted interface between the accounts thereby enabling cross account communication. The token exchange interface may be configured to call/request the first account and the second account for tokens in order to establish communication between the accounts. In an embodiment, the parameters in the tokens received by the token exchange interface includes account/tenant identity, path, schema, identity of the user of an account, application identity, etc. By implementing the token exchange interface, the present invention is able to negotiate between different security approaches used by the accounts.

Step 420 includes mapping roles of a user in a first account of the first computing platform to equivalent roles for a second account of the second computing platform based on the established trust relationship. The step 420 may include determining permissions of the user from the roles in the first account, wherein the roles comprise at least the permissions and user identifier; and mapping the permissions to equivalent permissions for the second application. Accordingly, the method restricts the interaction of the user in the second account to permitted roles that are identified by comparing the roles in the first account to equivalent roles in the second account. In an embodiment, the roles are automatically mapped to the equivalent roles based on the principle of least privileges).

Step 430 includes enabling communication between the user and an application hosted by the second account limited to the equivalent roles. In an embodiment, the step 430 may include exchanging application tokens between the first application hosted on the first account and the second application hosted on the second account via the token exchange interface. The application tokens are differentiated from the tokens exchanged between the accounts and the computing platforms. The application tokens are responsible for ensuring that access to the second account is limited to the equivalent roles.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

## Claims

1. A method for cross account communication across one or more computing platforms (210, 310), the method comprising:
establishing a trust relationship between accounts (A, B) within a computing platform (310) or between a first computing platform and a second computing platform of the one or more computing platforms (210, 310), wherein the trust relationship allows for the accounts (A, B) on the computing platforms (210, 310) to exchange tokens;
mapping roles of a user (110) in a first account (130, A) of the computing platform (310) to equivalent roles for a second account (150, B) of the computing platform (310) based on the established trust relationship; and
enabling communication between the user (110) and a second application (App2, 330) hosted by the second account (150, B) limited to the equivalent roles.

2. The method according to claim 1, wherein establishing the trust relationship between the first computing platform and the second computing platform comprises:
establishing the trust relationship between account zones of the first computing platform and the second computing platform.

3. The method according one of the preceding claims, further comprises:
exchanging tokens between the first account (130, A) and a token exchange interface (140, 212, 314);
exchanging tokens between the second account (150, B) and the token exchange interface (140, 212, 314); and
establishing the trust relationship between the first account (130, A) and the second account (150, B) based on the exchange of the tokens with the token exchange interface (140, 212, 314).

4. The method according to one of the preceding claims, further comprising:
exchanging application tokens between a first application (Appl, 320) hosted on the first account (130, A) and a second application (App2, 330) hosted on the second account (150, B) via the token exchange interface (140, 212, 314) .

5. The method according to one of claim 1 and claim 4, wherein mapping roles of a user (110) in the first account (130, A) of the first computing platform to equivalent roles for the second account (150, B), comprises:
determining permissions of the user (110) from the roles in the first account (130, A), wherein the roles comprise at least the permissions and user (110) identifier; and
mapping the permissions to equivalent permissions for the second application (App2, 330).

6. The method according to one of claim 1 and claim 5, further comprising:
receiving an access request from the user (110) by the second application (App2, 330);
authenticating the access request based on the application token exchange; and
enabling the user (110) to access the second application (App2, 330) and associated data based on the permissions.

7. The method according to one of the preceding claims, further comprising:
preventing reuse of the tokens exchanged between the token exchange interface (140, 212, 314) and the first account (130, A) or the second account (150, B), wherein communication between the first account (130, A) and the second account (150, B) is activated based on the application token exchange.

8. The method according to one of the preceding claims, further comprising:
sharing access rights of the second account (150, B) to the user (110) via the first account (130, A) based on the token exchange, whereby the first account (130, A) is indistinguishable from the second account (150, B) .

9. The method according to one of the preceding claims, further comprising:
providing a composite token comprising a subject token and an actor token by the token exchange interface (140, 212, 314) to the second account (150, B) and the first account (130, A), wherein the subject token represents identity of the second account (150, B) whose access rights has been delegated to the first account (130, A), and wherein the actor token represents identity of the user (110) on behalf of whom the access rights are requested by the first account (130, A) .

10. The method according to one of the preceding claims, further comprising:
establishing a chain of trust across a plurality of account zones of the one or more computing platforms (210, 310) ;
enabling applications hosted by the accounts (A, B) across the plurality of computing platforms (210, 310) to validate a chain of delegation based on the chain of trust, wherein the chain of delegation comprises a current delegation of the second account (150, B) and prior delegations nested within the current delegation; and
enabling communication between the user (110) and the second application (App2, 330) based on the current delegation.

11. A system for cross account communication across one or more computing platforms (210, 310), the system comprising:
a token exchange interface (140, 212, 314) configured to perform one or more steps according to claims 1-10; and
a gateway (120, 312) configured to:
receive application calls from the first application (Appl, 320) hosted on the first account (130, A);
initiate the application token exchange; and
enable the user (110) to access the second application (App2, 330) hosted on the second account (150, B) .

12. The system according to claim 11, further comprising:
an operator module (260) configured to:
determine whether the first application (Appl, 320) has external Application Programming Interface (API) dependencies; and
enable initiation of the application token exchange when the dependencies are determined.

13. The system according to one of claim 11 and claim 12, further comprising:
an access management module, wherein the access management module is configured to:
receive a request for an application token from the first application (Appl, 320);
request the application token using on a token exchange user profile created for the first application (Appl, 320) when the dependencies are determined;
receive the application token to initiate the application token exchange; and
transmit the application token to the first application (Appl, 320), wherein the first application (Appl, 320) invokes the application token with the token exchange interface (140, 212, 314) to initiate the application token exchange, wherein the first application (Appl, 320) invokes the second application (App2, 330) based on the application token exchange and wherein the second application (App2, 330) returns an API response to provide access rights to the user (110) of the first application (Appl, 320).

14. The system according to claim 13, wherein the access management module comprises a key manager and an identity access manager.

15. The system according to claim 11, further comprising:
at least one processing unit associated with the token exchange interface (140, 212, 314); and
a memory unit communicatively coupled to the processing unit configured to store computer implemented instructions that when executed implement the token exchange interface (140, 212, 314) according to claim 11.

16. A computer program product including program instruction to be executed by at least one processor, wherein executing the program instruction causes the at least one processor to perform a method according to at least one of claims 1-10.
